# EUROPEAN PATENT APPLICATION

(11) **EP 4 617 931 A1**
(43) Date of publication of application: **17.09.2025**
(21) Application number: 25155918.3
(22) Date of filing: 05.02.2025
(51) Int. Cl.: G06F 21/57, G06F 21/62, G06F 21/78, G06F 21/86, H04L 9/08, G06F 21/34, G06F 21/44

(54) **ELECTRONIC DEVICE, METHOD FOR PROTECTING ELECTRONIC DEVICE, AND NON-TRANSITORY COMPUTER READABLE STORAGE MEDIUM**

(30) Priority: 15.03.2024 CN 202410297584
(71) Applicant: Getac Technology Corporation, New Taipei City 221009 (TW)
(72) Inventor: CHENG, Po Hsien, Taipei City 11568 (TW); CHIU, Chia-Chang, Taipei City 11568 (TW)
(74) Representative: Lucke, Andreas

(57) **Abstract**

An electronic device includes a chassis, a chassis open detector, a security chip and a controller. The chassis open detector is disposed in the chassis and is configured to generate a warning signal in response to the chassis being opened. The security chip is configured to store authentication data, which includes a first code in an initial state, and is configured to modify the content of the authentication data in response to receiving the warning signal from the chassis opening detector. During a boot process of the electronic device, the controller is configured to receive the authentication data and determine whether the authentication data is consistent with the first code. When the authentication data is consistent with the first code, the controller allows the boot process to proceed. Otherwise, the controller causes the boot process to pause or terminate.

## Description

### BACKGROUND

### Technical Field

The present disclosure relates to an electronic device, a method for protecting an electronic device, and a non-transitory computer readable storage medium.

### Description of Related Art

For a typical electronic device (e.g., a laptop), it is difficult for the user to determine whether the device has been disassembled and tampered. If the device has been disassembled and tampered, and the use continues to use the device while being unaware of it, data breach may occur.

### SUMMARY

In view of the foregoing, one of the objects of the present disclosure is to provide an electronic device capable of detecting the chassis being opened and thus providing improved security.

In accordance with an embodiment of the present disclosure, an electronic device includes a chassis, a chassis open detector, a security chip and a controller. The chassis has an internal space. The chassis open detector is disposed in the internal space of the chassis and is configured to generate a warning signal in response to the chassis being opened. The security chip is configured to store authentication data. In an initial state, the authentication data includes a first code. The security chip is communicably coupled to the chassis open detector and is configured to modify content of the authentication data in response to receiving the warning signal. The controller is communicably coupled to the security chip. During a boot process of the electronic device, the controller is configured to receive the authentication data from the security chip and verify whether the authentication data is consistent with the first code. When the authentication data is consistent with the first code, the controller allows the boot process to continue. Otherwise, the controller causes the boot process to pause or terminate.

In one or more embodiments of the present disclosure, the security chip includes a microprocessor and a data storage device sharing a secure communication channel with the microprocessor. The data storage device is configured to store the authentication data. The microprocessor is configured to instruct the data storage device to replace the first code with a second code in response to receiving the warning signal. The second code is computed from the first code or randomly generated by the microprocessor or the data storage device.

In one or more embodiments of the present disclosure, the chassis includes a first housing component and a second housing component. The first housing component and the second housing component are combined to form the chassis. The chassis open detector includes at least one of: a push button disposed on the first housing component and being pressed by the second housing component; a pressure sensor disposed on the first housing component and being pressed by the second housing component; a Hall sensor and a magnet, provided at corresponding locations on the first housing component and the second housing component, respectively; or a light sensor configured to measure light intensity inside the chassis.

In one or more embodiments of the present disclosure, the controller is further configured to receive disassembly authorization information and, based on the disassembly authorization information, determine whether to skip the step of verifying whether the authentication data is consistent with the first code.

In one or more embodiments of the present disclosure, the controller is an embedded controller which includes a memory device configured to store the first code. The embedded controller is configured to verify whether the authentication data received from the security chip is consistent with the first code stored in the memory device.

In one or more embodiments of the present disclosure, the controller is configured to terminate or pause the boot process by prohibiting the electronic device from loading an operating system.

In one or more embodiments of the present disclosure, the electronic device further includes a communication device and a processor coupled to the communication device. The processor is configured to: determine whether there exists an authorized hardware security token coupled to the electronic device during the boot process; when there exists the authorized hardware security token coupled to the electronic device, connect to a server via the communication device and verify device identification information of the electronic device via the server; and allow the boot process to continue when verification of the device identification information is successful.

In one or more embodiments of the present disclosure, the controller includes a memory device configured to store boot authorization information after successful verification of the device identification information. The controller is configured to determine whether the boot authorization information is stored in the memory device during the boot process. The controller is configured to allow the boot process to continue when the boot authorization information is stored in the memory device.

In accordance with an embodiment of the present disclosure, a method for protecting an electronic device includes: storing authentication data by a security chip of the electronic device, wherein in an initial state, the authentication data includes a first code; detecting, by a chassis open detector of the electronic device, an event of a chassis of the electronic device being opened, and generating, by the chassis open detector, a warning signal in response to detection of the event; modifying, by the security chip, content of the authentication data in response to receiving the warning signal; during a boot process of the electronic device, receiving, by a controller of the electronic device, the authentication data from the security chip and verifying, by the controller, whether the authentication data is consistent with the first code; and allowing, by the controller, the boot process to continue when the authentication data is consistent with the first code, and otherwise causing, by the controller, the boot process to pause or terminate.

In one or more embodiments of the present disclosure, the step of modifying the content of the authentication data includes: replacing the first code with a second code, the second code being computed from the first code or randomly generated by the security chip.

In one or more embodiments of the present disclosure, the step of detecting the event of the chassis being opened includes: using a push button, a pressure sensor, or a pair of Hall sensor and magnet to detect partial or complete separation of two housing components of the chassis; or using a light sensor disposed inside the chassis to detect light from surrounding environment entering the chassis.

In one or more embodiments of the present disclosure, the controller is an embedded controller which includes a memory device configured to store the first code. The embedded controller is configured to verify whether the authentication data received from the security chip is consistent with the first code stored in the memory device.

In one or more embodiments of the present disclosure, the method further includes: determining whether there exists an authorized hardware security token coupled to the electronic device during the boot process; when there exists the authorized hardware security token coupled to the electronic device, connecting to a server by the electronic device and verifying device identification information of the electronic device via the server; and allowing the boot process to continue when verification of the device identification information is successful.

In one or more embodiments of the present disclosure, the device identification information includes at least one of: a serial number of the electronic device, an identifier of a hardware component of the electronic device, or a unique identifier of the electronic device. The unique identifier is a combination of identifiers of a number of hardware components of the electronic device.

In accordance with an embodiment of the present disclosure, a non-transitory computer readable storage medium is configured to store one or more executable instructions, which when executed by a controller causes the controller to: receive authentication data from a security chip of an electronic device in response to a power button of the electronic device being pressed, wherein in an initial state, the authentication data includes a first code, and wherein the security chip is configured to modify content of the authentication data in response to a chassis of the electronic device being opened; verify whether the authentication data is consistent with the first code; and allow the electronic device to boot up when the authentication data is consistent with the first code, and terminate or pause a boot process of the electronic device when the authentication data is not consistent with the first code.

In sum, the electronic device of the present disclosure includes a chassis open detector and a security chip. The security chip is configured to store authentication data and is configured to modify content of the authentication data in response to receiving a warning signal from the chassis opening detector, which indicates that the chassis of the electronic device has been opened. During the boot process of the electronic device, a controller of the electronic device receives the authentication data and checks if the authentication data has been modified. If the authentication data has not been modified, then the chassis has not been opened and the electronic device can boot normally. If the authentication data has been modified, then the controller causes the boot process to pause or terminate. The electronic device therefore does not load the operating system, and the data stored in the electronic device by the user is prevented from being stolen.

### BRIEF DESCRIPTION OF THE DRAWINGS

To make the objectives, features, advantages, and embodiments of the present disclosure, including those mentioned above and others, more comprehensible, descriptions of the accompanying drawings are provided as follows.
Fig. 1 illustrates a schematic assembled view of an electronic device in accordance with an embodiment of the present disclosure;
Fig. 2 illustrates a schematic exploded view of the electronic device shown in Fig. 1;
Fig. 3 illustrates a schematic sectional view of the electronic device shown in Fig. 1 taken along the line segment 3-3';
Fig. 4 illustrates a block diagram of the electronic device shown in Fig. 1;
Fig. 5 illustrates a block diagram of an electronic device in accordance with another embodiment of the present disclosure;
Fig. 6 illustrates a schematic sectional view of the electronic device shown in Fig. 5, which shows the Hall sensor being installed in a chassis of the electronic device;
Fig. 7 illustrates a block diagram of an electronic device in accordance with another embodiment of the present disclosure;
Fig. 8 illustrates a schematic sectional view of the electronic device shown in Fig. 7, which shows the light sensor being installed in a chassis of the electronic device;
Fig. 9 illustrates a block diagram of an electronic device in accordance with another embodiment of the present disclosure;
Fig. 10 illustrates a schematic sectional view of the electronic device shown in Fig. 9, which shows the pressure sensor being installed in a chassis of the electronic device; and
Fig. 11 illustrates a block diagram of an electronic device in accordance with another embodiment of the present disclosure.

### DETAILED DESCRIPTION

For the completeness of the description of the present disclosure, reference is made to the accompanying drawings and the various embodiments described below. Various features in the drawings are not drawn to scale and are provided for illustration purposes only. To provide full understanding of the present disclosure, various practical details will be explained in the following descriptions. However, a person with an ordinary skill in relevant art should realize that the present disclosure can be implemented without one or more of the practical details. Therefore, the present disclosure is not to be limited by these details.

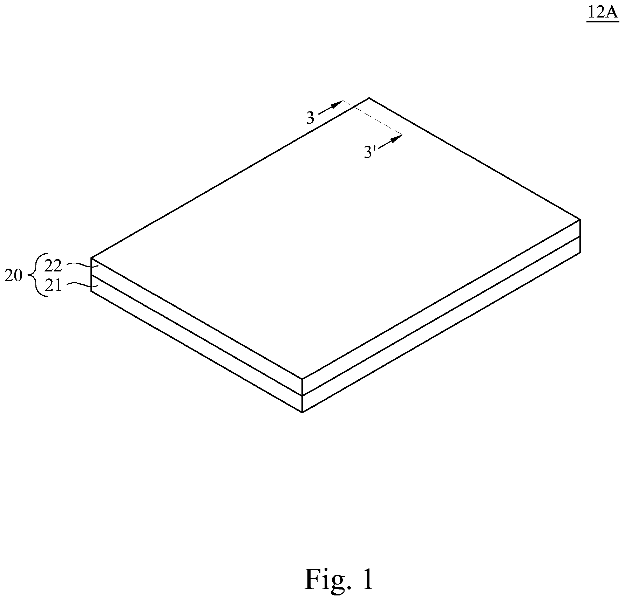

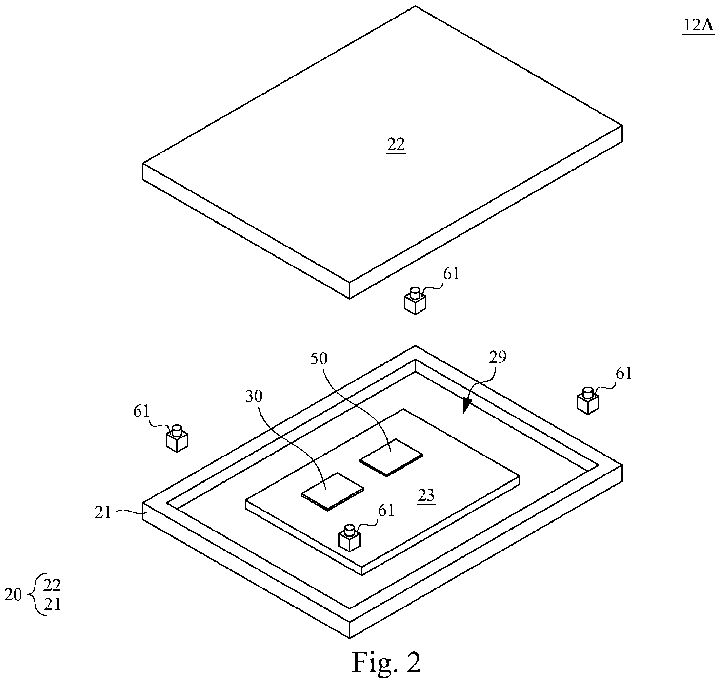

Reference is made to Figs. 1 and 2. Fig. 1 illustrates a schematic assembled view of an electronic device 12A in accordance with an embodiment of the present disclosure. Fig. 2 illustrates a schematic exploded view of the electronic device 12A shown in Fig. 1. The electronic device 12A (e.g., a laptop, desktop or tablet computer) includes a chassis 20 having an internal space 29. The internal space 29 is configured to accommodate various electronic and mechanical components of the electronic device 12A. For example, in the present embodiment, the electronic device 12A further includes a motherboard 23 disposed in the internal space 29 of the chassis 20. The motherboard 23 may have one or more electronic components mounted thereon. For example, the electronic components may include at least one of a central processing unit (CPU), a graphics processing unit (GPU), a chipset, an embedded controller (EC), a firmware (UEFI or BIOS) storage device, a DRAM module, a storage device (e.g., mechanical drive or solid state drive), or a communication device (e.g., Ethernet controller, Bluetooth/Wi-Fi module, or 4G or 5G modem).

As shown in Figs. 1 and 2, the chassis 20 includes a first housing component 21 and a second housing component 22. The first housing component 21 and the second housing component 22 can be separated, or can be combined to form the chassis 20. The first housing component 21 can be joined with the second housing component 22 by screwing, snap fitting, adhesives or other suitable means. The internal space 29 of the chassis 20 is the space enclosed by the first housing component 21 and the second housing component 22.

As shown in Figs. 1 and 2, the electronic device 12A further includes a chassis open detector disposed in the internal space 29 of the chassis 20 and configured to generate a warning signal in response to the chassis 20 being opened (e.g., when the first housing component 21 and the second housing component 22 are partially or completely separated). In the illustrated embodiment, the chassis open detector includes at least one push button 61 with a movable cap. When the cap is not pressed, the push button 61 is configured to output a first signal. When the cap is pressed, the push button 61 is configured to output a second signal. In some embodiments, the at least one push button 61 can be arranged along one or more edges of the chassis 20. In some embodiments, the at least one push button 61 can be provided at some or all corners of the chassis 20.

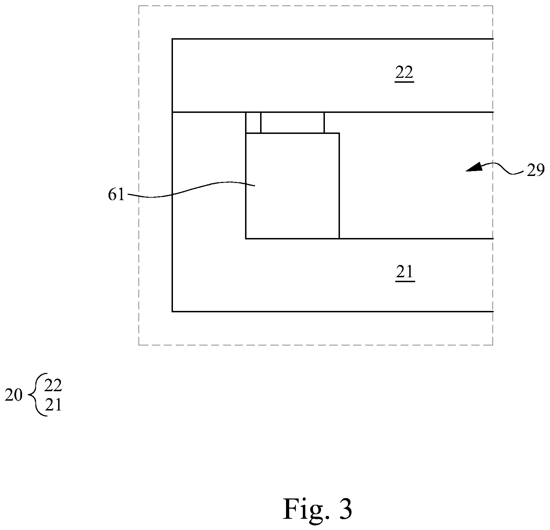

Reference is made to Fig. 3, which illustrates a schematic sectional view of the electronic device 12A shown in Fig. 1 taken along the line segment 3-3'. In some embodiments, the push button 61 is disposed on the first housing component 21 and is pressed by the second housing component 22. When the first housing component 21 and the second housing component 22 are combined, the cap of the push button 61 is pressed by the second housing component 22. When the chassis 20 is opened or disassembled, the cap of the push button 61 is not pressed and thus the signal output by the push button 61 changes from the second signal to the first signal. The electronic device 12A can detect this change and thus become aware of the chassis 20 being opened. In some embodiments, the first signal output by the push button 61 can act as the warning signal.

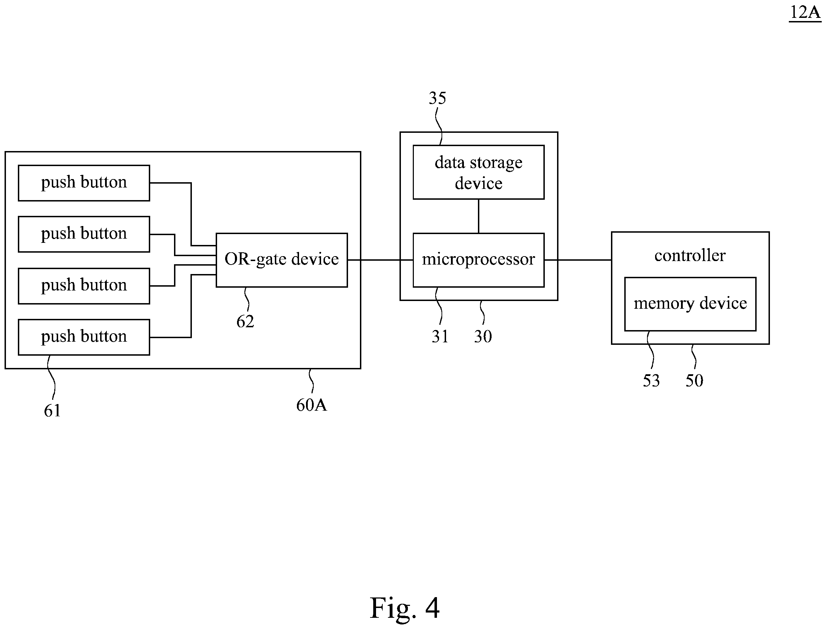

Reference is made to Fig. 4, which illustrates a block diagram of the electronic device 12A shown in Fig. 1. In some embodiments, the chassis open detector 60A includes a plurality of push buttons 61 and an OR-gate device 62 electrically coupled to each of the push buttons 61. When any of the push buttons 61 outputs the first signal, the OR-gate device 62 is configured to output the first signal, which acts as the warning signal.

As shown in Fig. 4, the electronic device 12A further includes a security chip 30, which may be disposed on the motherboard 23 shown in Fig. 1. The security chip 30 is configured to store authentication data. In an initial state (e.g., when the electronic device 12A is fresh out of the factory or is factory reset), the authentication data includes a first code. The first code can be a number, for example, an integer or a floating point number. The first code can also be other format, such as a string. The security chip 30 is communicably coupled to the chassis open detector 60A and is configured to modify content of the authentication data in response to receiving the warning signal from the chassis open detector 60A. Hence, the security chip 30 modify the content of the authentication data in response to the chassis 20 of the electronic device 12A being opened.

As shown in Fig. 4, in some embodiments, the security chip 30 includes a microprocessor 31 and a data storage device 35 communicably coupled to the microprocessor 31. The microprocessor 31 can send data or command to the data storage device 35, or can receive data or command from the data storage device 35. The data storage device 35 shares a secure communication channel with the microprocessor 31 (e.g., all communications between the microprocessor 31 and the data storage device 35 are encrypted). The data storage device 35 prohibits unauthorized data reading to prevent data from being logged or read arbitrarily. The data storage device 35 is configured to store the authentication data. The microprocessor 31 is communicably coupled to the chassis open detector 60A. In response to receiving the warning signal from the chassis open detector 60A, the microprocessor 31 instructs the data storage device 35 to replace the first code with a second code, i.e., the content of the authentication data stored in the data storage device 35 changes from the first code to the second code.

In some embodiments, the second code is randomly generated by the microprocessor 31 or the data storage device 35 (e.g., the data storage device 35 may include a built-in random number generator). In some embodiments, the second code is computed from the first code by the microprocessor 31 or the data storage device 35 (e.g., the data storage device 35 may include a built-in circuit for computation). For example, the microprocessor 31 or the data storage device 35 can apply one or more arithmetic operations to the first code to produce the second code. The one or more arithmetic operations can include at least one of: addition, subtraction, multiplication, division, modulo, or bit-wise operations (e.g., left/right shift, NOT, AND, OR and XOR). In some embodiments, the first code and the second code are both numbers, and the second code can be the first code plus one.

In some embodiments, the microprocessor 31 can be a microprocessor implementing the ARM instruction set architecture. However, the present disclosure is not limited thereto. The microprocessor can also implement other instruction set architectures. In some embodiments, the data storage device 35 includes a flash memory chip. In some embodiments, the electronic device 12A further includes a battery (not depicted). The security chip 30 and the chassis open detector 60A can be coupled to the battery, such that the security chip 30 and the chassis open detector 60A can obtain power from the battery and deal with possible tampering attempts when the electronic device 12A is powered off.

As shown in Fig. 4, the electronic device 12A further includes a controller 50 communicably coupled to the security chip 30. More specifically, the controller 50 is communicably coupled to the microprocessor 31 of the security chip 30. The controller 50 can send data or command to the security chip 30, or can receive data or command from the security chip 30. The controller 50 may be disposed on the motherboard 23 shown in Fig. 1.

During a boot process of the electronic device 12A (e.g., the electronic device 12A can start the boot process in response to a power button (not depicted) of the electronic device 12A being pressed or triggered), the controller 50 is configured to receive the authentication data from the security chip 30 and verify whether the authentication data is consistent with the first code (e.g., verify whether the content of the authentication data matches the first code). When the authentication data is consistent with the first code, meaning that the authentication data has not been modified and the chassis 20 has not been opened, the controller 50 allows the boot process to continue, i.e., the electronic device 12A can boot normally. On the other hand, when the authentication data is not consistent with the first code, meaning that the authentication data has been modified and the chassis 20 has been opened, the controller 50 causes the boot process to pause (e.g., a display of the electronic device 12A (not depicted) pauses at a warning screen) or terminate (e.g., the electronic device 12A is prohibited from booting up and shuts down immediately) to prevent the data stored in the electronic device 12A by the user from being stolen.

In some embodiments, during the boot process of the electronic device 12A, the controller 50 actively reads the authentication data stored in the security chip 30. For example, the controller 50 can send a command to the microprocessor 31 of the security chip 30 to instruct the microprocessor 31 to read the authentication data stored in the data storage device 35 and return it. In some embodiments, the controller 50 is configured to pause or terminate the boot process by prohibiting the electronic device 12A from loading an operating system (i.e., prohibiting the electronic device 12A from loading an operating system image file stored on a storage device of the electronic device 12A into main memory and start executing the code included in the image file).

In some embodiments, the controller 50 is an embedded controller (EC). The embedded controller receives the authentication data from security chip 30 in response to the power button of the electronic device 12A being pressed and verifies whether the authentication data is consistent with the first code. In some embodiments, the embedded controller includes a memory device 53 configured to store the first code. The embedded controller is configured to verify whether the authentication data received from the security chip 30 is consistent with the first code stored in the memory device 53, such that the embedded controller can determine whether the content of the authentication data has been modified. In some embodiments, the memory device 53 of the controller 50 includes an electrically-erasable programmable read-only memory (EEPROM).

In some embodiments, the embedded controller is communicably coupled to the CPU of the electronic device 12A. When the authentication data is consistent with the first code, the embedded controller sends a first message to the CPU indicating that the authentication data is valid. On the other hand, when the authentication data is not consistent with the first code, the embedded controller sends a second message to the CPU indicating that the authentication data is invalid. The CPU continues the boot process when receiving the first message, and pauses or terminates the boot process when receiving the second message (e.g., the CPU causes a display of the electronic device 12A (not depicted) to show a warning screen and pauses at the warning screen; the warning screen may include a warning message about the fact that the chassis 20 has been opened).

In some embodiments, the memory device 53 of the embedded controller further stores one or more executable instructions which, when executed by the embedded controller, causes the embedded controller to carry out the task of verifying the authentication data and sending message to the CPU as described above.

In some embodiments, the controller 50 can also be the CPU. The CPU executes the firmware in the firmware storage device (UEFI or BIOS flash memory) in response to the power button of the electronic device 12A being pressed. Execution of the firmware (which includes machine instructions) causes the CPU to receive the authentication data from the security chip 30, verify whether the authentication data is consistent with the first code, and based on the result of verifying the authentication data, allow the boot process to continue, or pause or terminate the boot process.

In some embodiments, the controller 50 is further configured to receive disassembly authorization information and, based on the disassembly authorization information, determine whether to skip the step of verifying the authentication data (i.e., verifying whether the authentication data is consistent with the first code). The disassembly authorization information is provided by the user via one or more input device (not depicted) of the electronic device 12A. In some embodiments, the disassembly authorization information can be input by pressing a certain combination of key(s) or button(s) of the electronic device 12A. For example, the disassembly authorization information can be input by simultaneously pressing the power button and the ESC key. In some embodiments, the controller 50 skips the step of verifying the authentication data in response to detecting the user pressing a certain combination of key(s) or button(s) of the electronic device 12A. By this arrangement, when the electronic device 12A is in need of repair, which requires opening the chassis 20, the electronic device 12A can boot normally after the repair using the disassembly authorization information.

In some embodiments, the controller 50 is further configured to determine whether to perform a reset operation based on the disassembly authorization information. The reset operation may include the following steps: (1) the controller 50 instructs the security chip 30 to change the content of the authentication data stored therein to a new first code, which can be randomly generated by the microprocessor 31 or the data storage device 35 of the security chip 30; (2) after changing the content of the authentication data, passing the new first code to the controller 50; and (3) the controller 50 stores the new first code in the memory device 53. As a result, when the electronic device 12A is in need of repair, which requires opening the chassis 20, the electronic device 12A can boot normally after the repair.

In some embodiments, the controller 50 performs the reset operation in response to detecting the user pressing a certain combination of key(s) or button(s) of the electronic device 12A. In some embodiments, the controller 50 skips the step of verifying the authentication data and performs the reset operation in response to detecting the user pressing a certain combination of key(s) or button(s) of the electronic device 12A.

In some embodiments, the controller 50 is further configured to receive the disassembly authorization information and, based on the disassembly authorization information, determine whether to instruct the security chip 30 to temporarily not modify the content of the authentication data (regardless of whether the warning signal is received by the security chip 30). In some embodiments, the disassembly authorization information is a password input by a user. The controller 50 can verify the password. When the password is correct, the controller 50 instructs the security chip 30 to temporarily not modify the content of the authentication data. On the other hand, when the password is incorrect, the security chip 30 works as usual, i.e., the security chip 30 modifies the content of the authentication data in response to receiving the warning signal. The password is only known to person or people having authorization to disassemble the electronic device 12A, such as authorized repairman and the user/owner of the electronic device 12A. By this arrangement, when the electronic device 12A is in need of repair, one can input password to the electronic device 12A to make the security chip 30 temporarily not modify the content of the authentication data in response to the chassis 20 being opened, and the electronic device 12A can boot normally after the repair.

In some embodiments, when the boot process pauses due to the authentication data being inconsistent with the first code (e.g., when the display of the electronic device 12A pauses at the warning screen), the controller 50 is further configured to receive the disassembly authorization information and, based on the disassembly authorization information, determine whether to allow the boot process to continue. In some embodiments, the disassembly authorization information is a password input by a user. The controller 50 can verify the password. When the password is correct, the controller 50 allows the boot process to continue (e.g., the electronic device 12A can start loading the operating system). On the other hand, when the password is incorrect, the boot process remains paused. By this arrangement, the user can be given the choice to decide whether to continue using the electronic device 12A.

In some embodiments, when the electronic device 12A is in a running state after successfully booting up, and when the chassis open detector 60A generates the warning signal in response to the chassis 20 being opened, the microprocessor 31 of the security chip 30 can, in response to receiving the warning signal, send an abnormal signal to the controller 50. In response to receiving the abnormal signal, the controller 50 can cause the electronic device 12A to shut down. For example, the controller 50 can report to the CPU that the chassis 20 has been opened and the CPU can start the shutdown process.

In some embodiments, whenever the event of the chassis 20 being opened occurs (e.g., when the chassis open detector 60A generates the warning signal), the memory device 53 of the controller 50 is configured to store information associated with the event, such as the date and the time when the chassis 20 is opened.

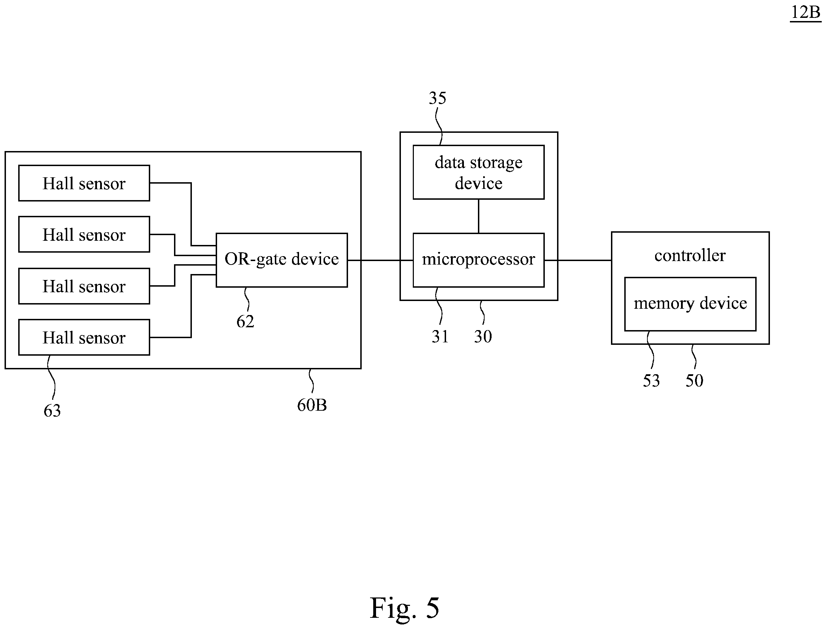

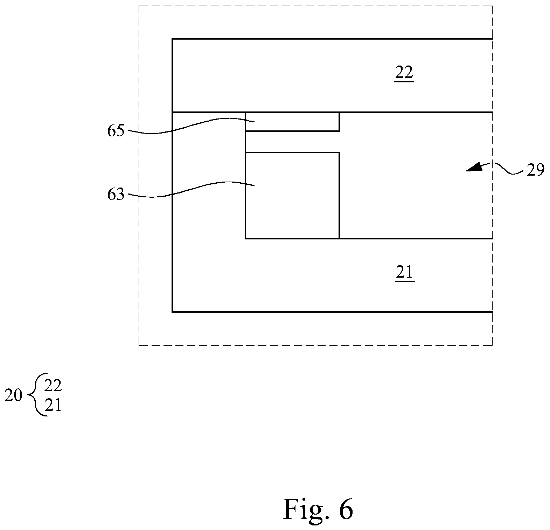

Reference is made to Figs. 5 and 6. Fig. 5 illustrates a block diagram of an electronic device 12B in accordance with another embodiment of the present disclosure. Fig. 6 illustrates a schematic sectional view of the electronic device 12B shown in Fig. 5, which shows the Hall sensor being installed in a chassis 20 of the electronic device 12B. In the present embodiment, the chassis open detector 60B includes at least one Hall sensor 63. Each Hall sensor 63 is paired with a magnet 65. The Hall sensor 63 and the magnet 65 are disposed in the internal space 29 of the chassis 20 and are provided at corresponding locations on the first housing component 21 and the second housing component 22. In some embodiments, the Hall sensor 63 and the magnet 65 can be arranged along one or more edges of the chassis 20. In some embodiments, the Hall sensor 63 and the magnet 65 can be provided at some or all corners of the chassis 20.

As shown in Figs. 5 and 6, when the chassis 20 is opened, the Hall sensor 63 and the magnet 65, which are disposed on the first housing component 21 and the second housing component 22 respectively, are farther apart and the Hall sensor 63 is configured to output a first signal. When the chassis 20 is not opened, the Hall sensor 63 and the magnet 65 are closer to each other and the Hall sensor 63 is configured to output a second signal. The electronic device 12B can detect the signal output by the Hall sensor 63 changing from the second signal to the first signal and thus become aware of the chassis 20 being opened. In some embodiments, the first signal output by the Hall sensor 63 can act as the warning signal.

As shown in Figs. 5 and 6, the chassis open detector 60B includes a plurality of Hall sensors 63 and a OR-gate device 62 electrically coupled to each of the Hall sensors 63. The OR-gate device 62 is communicably coupled to the security chip 30. When any of the Hall sensors 63 outputs the first signal, the OR-gate device 62 can output the first signal as the warning signal.

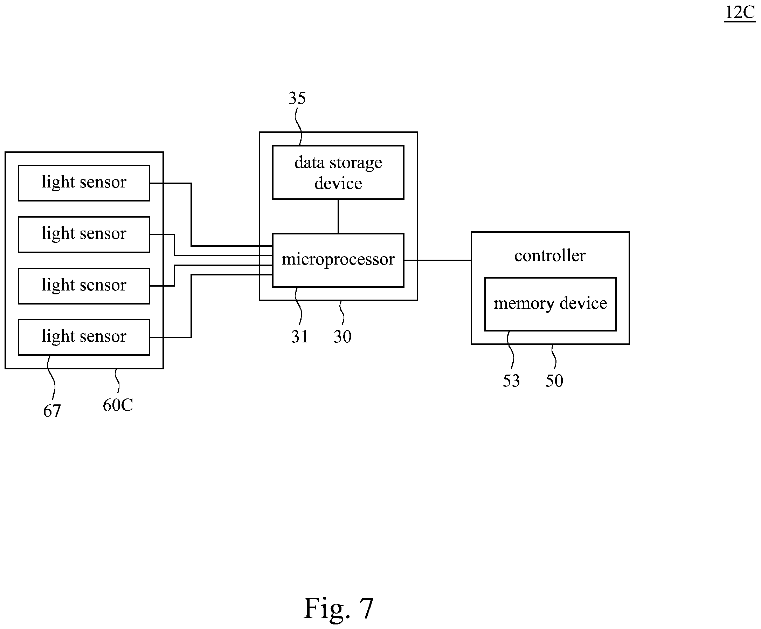

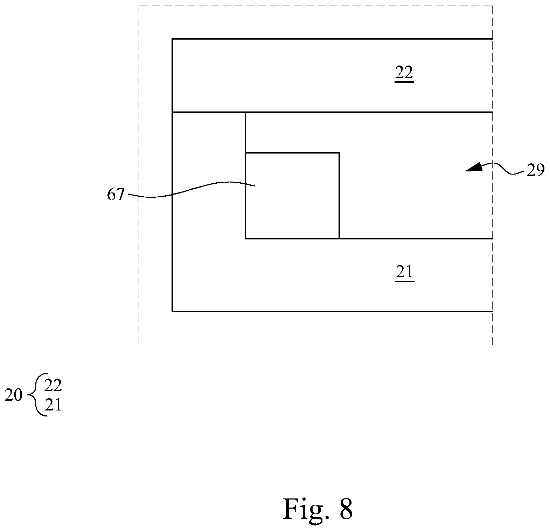

Reference is made to Figs. 7 and 8. Fig. 7 illustrates a block diagram of an electronic device 12C in accordance with another embodiment of the present disclosure. Fig. 8 illustrates a schematic sectional view of the electronic device 12C shown in Fig. 7, which shows the light sensor being installed in a chassis 20 of the electronic device 12C. In the present embodiment, the chassis open detector 60C includes at least one light sensor 67 disposed in the internal space 29 of the chassis 20. In some embodiments, the at least one light sensor 67 can be arranged along one or more edges of the chassis 20. In some embodiments, the at least one light sensor 67 can be provided at some or all corners of the chassis 20.

The light sensor 67 is configured to provide at least on sensing signal indicative of a light intensity measured by the light sensor 67. The security chip 30 is communicably coupled to the light sensor 67. When the sensing signal provided by any of the at least one light sensor 67 indicates that the light intensity is greater than a threshold value, the security chip 30 can make a determination that the chassis 20 has been opened (i.e., the light sensor 67 detects light from surrounding environment entering the chassis 20) and modify the content of the authentication data accordingly. In other words, the sensing signal that indicates the light intensity being greater than the threshold value can act as the warning signal.

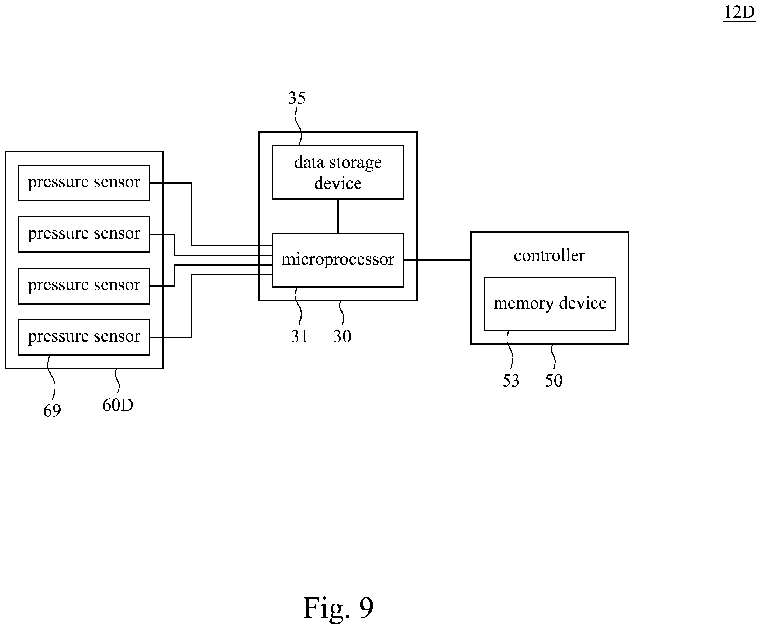

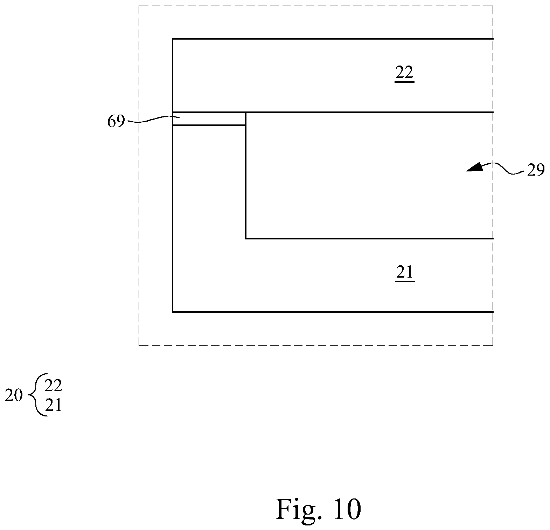

Reference is made to Figs. 9 and 10. Fig. 9 illustrates a block diagram of an electronic device 12D in accordance with another embodiment of the present disclosure. Fig. 10 illustrates a schematic sectional view of the electronic device 12D shown in Fig. 9, which shows the pressure sensor being installed in a chassis 20 of the electronic device 12D. In the present embodiment, the chassis open detector 60D includes at least one pressure sensor 69 disposed on the first housing component 21 and being pressed by the second housing component 22. In some embodiments, the at least one pressure sensor 69 can be arranged along one or more edges of the chassis 20. In some embodiments, the at least one pressure sensor 69 can be provided at some or all corners of the chassis 20.

The pressure sensor 69 is configured to provide at least one sensing signal indicative of the pressure acting on the pressure sensor 69. The sensing signal is indicative of the pressure applied to the pressure sensor 69 by the first housing component 21 and the second housing component 22, in the absence of other external forces. The security chip 30 is communicably coupled to the pressure sensor 69 and is configured to monitor whether the chassis 20 has been opened or forcefully damaged based on the sensing signal provided by the pressure sensor 69.

In some embodiments, when the sensing signal provided by any of the at least one pressure sensor 69 indicates that the pressure is less than a first threshold value, the security chip 30 can make a determination that the chassis 20 has been opened and modify the content of the authentication data accordingly. In other words, the sensing signal that indicates the pressure being less than the first threshold value can act as the warning signal. In some embodiments, when the sensing signal provided by any of the at least one pressure sensor 69 indicates that the pressure is greater than a second threshold value, the security chip 30 can make a determination that there is an attempt to forcefully damage the chassis 20 and modify the content of the authentication data accordingly. In other words, the sensing signal that indicates the pressure being greater than the second threshold value can also act as the warning signal. In some embodiments, the chassis open detector 60D includes a plurality of pressure sensors 69., and when sensing signals provided by the pressure sensors 69 indicate pressure imbalance (e.g., when the difference between the greatest value and the least value of the sensing signals is greater than a third threshold), the security chip 30 can make a determination that there is an attempt to forcefully damage the chassis 20 and modify the content of the authentication data accordingly.

In some embodiments, the pressure sensor 69 may include a piezoelectric sensor. The piezoelectric sensor includes piezoelectric material configured to output an sensing signal having a voltage proportional to the force acting thereon. The pressure sensor 69 may also include other suitable materials or circuits that can detect change of force or pressure, such as piezoresistive material.

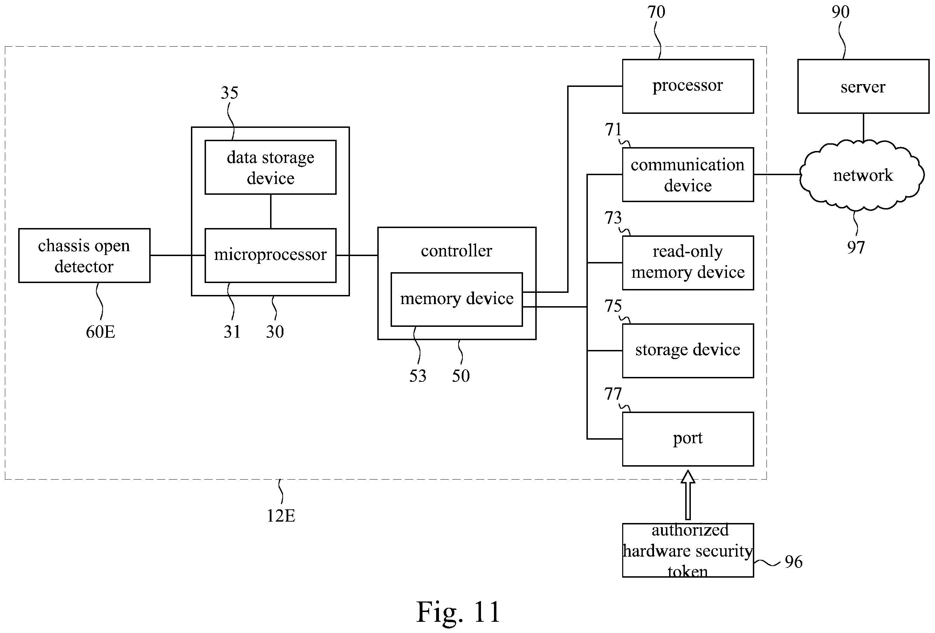

Reference is made to Fig. 11. Fig. 11 illustrates a block diagram of an electronic device 12E in accordance with another embodiment of the present disclosure. The electronic device 12E of the present embodiment includes a chassis open detector 60E and the aforementioned security chip 30 and controller 50. The chassis open detector 60E can be either one of the chassis open detectors 60A, 60B, 60C and 60D mentioned above or any combination thereof. The controller 50 is an embedded controller and is coupled to the CPU of the electronic device 12E.

As shown in Fig. 11, the electronic device 12E further includes a port 77 which can be connected to an authorized hardware security token 96. For example, the port 77 may include a socket, and the authorized hardware security token 96 may include an electrical connector that can be plugged into the socket of the port 77. The port 77 can be a USB port, and corresponding, the authorized hardware security token 96 can be a USB hardware security token. The authorized hardware security token 96 connected to the electronic device 12E via the port 77 can communicate with the electronic device 12E, i.e., the authorized hardware security token 96 can send data to or receive data from the electronic device 12E.

The authorized hardware security token 96 can assist the electronic device 12E with acquiring boot authorization information, such that the electronic device 12E can boot normally when its tampering protection mechanism has been triggered (e.g., when the electronic device 12E is prohibited from booting up as a result of a determination that the chassis 20 of the electronic device 12E has been opened). For example, use cases of the authorized hardware security token 96 may include: repairman or other authorized person can utilize the authorized hardware security token 96 to allow the electronic device 12E to boot normally after disassembling the electronic device 12E for examination, repair, maintenance or other purposes.

As shown in Fig. 11, the electronic device 12E further includes a communication device 71 which can connect to a network 97 (e.g., the Internet) and connect to a server 90 via the network 97. The communication device 71 may include at least one of an Ethernet controller, a Wi-Fi module or a cellular module (e.g., 4G or 5G modem). The electronic device 12E further includes a processor 70 coupled to the communication device 71. The processor 70 is, for example, the CPU. The electronic device 12E further includes one or more storage devices 75 configured to store the operating system and other programs or data. The one or more storage devices 75 may include mechanical disk, solid-state drive or other types of storage media.

During the boot process of the electronic device 12E, the processor 70 is configured to perform the following steps S1 to S3 to help the electronic device 12E boot normally when its tampering protection mechanism has been triggered. First, in step S1, the processor 70 is configured to determine whether there exists an authorized hardware security token 96 coupled to the electronic device 12E (e.g., detecting whether there is an authorized hardware security token 96 plugged into the port 77). In some embodiments, the processor 70 first determines whether the electronic device 12E is prohibited from booting up (e.g., when the controller 50 determines that the authentication data is not consistent with the first code, or when the memory device 53 of the controller 50 stores information associated with the event of the chassis 20 being opened). When the electronic device 12E is prohibited from booting up, the processor 70 executes step S1. In some embodiments, step S1 is performed during the execution of UEFI or BIOS firmware.

When there exists the authorized hardware security token 96 coupled to the electronic device 12E, the processor 70 is configure to execute a hardware verification program. In some embodiments, the hardware verification program is stored in the authorized hardware security token 96, and the electronic device 12E is configured to boot to the authorized hardware security token 96 (e.g., a bootable USB device) to execute the hardware verification program. In some embodiments, before booting to the authorized hardware security token 96, the electronic device 12E turns off the one or more storage devices 75 to make sure that the data stored in the one or more storage devices 75 would not be read. In some embodiments, when there does not exist any authorized hardware security token 96 coupled to the electronic device 12E, the boot process terminates, and the processor 70 causes the electronic device 12E to shut down.

After execution of the hardware verification program has started, the processor 70 is configured to connect to the server 90 via the communication device 71 and verify device identification information of the electronic device 12E via the server (step S2). In some embodiments, the processor 70 first determines whether the communication device 71 is connected to the network 97. When the communication device 71 is connected to the network 97, the processor 70 executes step S2. In some embodiments, when the communication device 71 is not connected to the network 97, the processor 70 causes the electronic device 12E to shut down. The processor 70 can also cause a display of the electronic device 12E (not depicted) to display a message "cannot connect to server" before the electronic device 12E shuts down.

In some embodiments, the device identification information includes at least one of: a serial number of the electronic device 12E (e.g., a serial number assigned to the electronic device by the manufacturer of the electronic device 12E), an identifier of a hardware component of the electronic device 12E (e.g., CPUID, MAC address, or IMEI), or a unique identifier of the electronic device. The unique identifier can be a combination of identifiers of a number of hardware components of the electronic device 12E. For example, the unique identifier can be generated by applying at least one hash function to identifiers of a number of hardware components.

In some embodiments, the processor 70 is configured to read the device identification information from at least one read-only memory device 73 of the electronic device 12E. The at least one read-only memory device 73 can be mounted on the motherboard of the electronic device 12E, or can be built in the processor 70, the communication device 71 or other hardware components of the electronic device 12E. The processor 70 can read the device identification information via device drivers.

In some embodiments, the server 90 is configured to keep an authorization list. Each entry of the authorization list can include (1) the device identification information of a device which have been given authorization to boot and (2) associated boot authorization information, which can include an authorization code, an authorized number of boot, and a deadline for authorized boot. In some embodiments, the server 90 receives application for boot authorization from repairman or other authorized person. For example, before disassembling the electronic device 12E, repairman or other authorized person can file an application for boot authorization and send the device identification information of the electronic device 12E to the server 90. The application can be reviewed manually by staff or automatically by the server 90 in accordance with certain procedure. When the application is accepted, the device identification information of the electronic device 12E is added to the authorization list, and the boot authorization information associated therewith is set.

In some embodiments, the step of verifying the device identification information of the electronic device 12E includes: sending the device identification information of the electronic device 12E to the server 90 via the communication device 71; determining, by the server 90, whether the device identification information of the electronic device 12E is included in the authorization list (e.g., determining whether there is an entry in the authorization list whose device identification information matches the device identification information of the electronic device 12E); when the device identification information of the electronic device 12E is included in the authorization list, sending, by the server 90, a message indicating successful verification to the electronic device 12E (in this case, the boot authorization information can be included in the message), on the other hand, when the device identification information of the electronic device 12E is not included in the authorization list, sending, by the server 90, a message indicating unsuccessful verification to the electronic device 12E. The processor 70 of the electronic device 12E can determine whether verification of the device identification information of the electronic device 12E is successful based on the message received from the server 90.

In some embodiments, the server 90 can send part or all of the entries of the authorization list to the electronic device 12E. After the electronic device 12E receives part or all of the entries of the authorization list, the processor 70 can verify whether the device identification information received from the server 90 matches the device identification information of the electronic device 12E. When the device identification information received from the server 90 matches the device identification information of the electronic device 12E, the processor 70 can determine that verification of the device identification information of the electronic device 12E is successful. Otherwise, the processor 70 can determine that verification of the device identification information of the electronic device 12E is unsuccessful. In some embodiments, the electronic device 12E is configured to send its serial number to the server 90. After receiving the serial number from the electronic device 12E, the server 90 can select entry that matches the serial number of the electronic device 12E from the authorization list and return the selected entry to the electronic device 12E.

Next, in step S3, the processor 70 allows the boot process of the electronic device 12E to continue when verification of the device identification information is successful. For example, the electronic device 12E can provide power to the one or more storage devices 75, load the operating system image file stored on the one or more storage devices 75 into main memory, and start execution of the operating system. On the other hand, when verification of the device identification information is unsuccessful, the processor 70 causes the electronic device 12E to shut down. The processor 70 can also cause a display of the electronic device 12E (not depicted) to display a message "no boot authorization" before the electronic device 12E shuts down.

In some embodiments, the memory device 53 of the controller 50 is configured to store the boot authorization information after successful verification of the device identification information. At the next boot of the electronic device 12E, the controller 50 is configured to determine whether the boot authorization information is stored in the memory device 53. When the boot authorization information is stored in the memory device 53, the controller 50 allows the boot process to continue, and the processor 70 can skip the verification procedure including steps S1-S3 described above. In some embodiments, the controller 50 first determines whether the electronic device 12E is prohibited from booting up (e.g., when the controller 50 determines that the authentication data is not consistent with the first code, or when the memory device 53 of the controller 50 stores information associated with the event of the chassis 20 being opened). When the electronic device 12E is prohibited from booting up, the controller 50 checks whether the boot authorization information is stored in the memory device 53.

In some embodiments, the boot authorization information is acquired by the communication device 71 from the server 90. In some embodiments, the boot authorization information can include at least one of a person ID, an authorization code, an authorized number of boot, or a deadline for authorized boot. In some embodiments, the controller 50 is further configured to determine whether the authorized number of boot is greater than zero. When the authorized number of boot is greater than zero, the controller 50 allows the boot process to continue and decrement the authorized number of boot by one. On the other hand, when the authorized number of boot is zero, the controller 50 causes the boot process to pause or terminate. In some embodiments, during the boot process, the controller 50 is further configured to determine whether the current time is within the deadline for authorized boot. When the current time is within the deadline for authorized boot, the controller 50 allows the boot process to continue. On the other hand, when the current time is not within the deadline for authorized boot, the controller 50 causes the boot process to pause or terminate.

In accordance with an embodiment of the present disclosure, a method for protecting an electronic device includes: storing authentication data by a security chip of the electronic device (e.g., the security chip 30 mentioned above), wherein in an initial state, the authentication data includes a first code; detecting, by a chassis open detector of the electronic device (e.g., the chassis open detector 60A, 60B, 60C, 60D or 60E mentioned above), an event of a chassis of the electronic device being opened, and generating, by the chassis open detector, a warning signal in response to detection of the event; modifying, by the security chip, content of the authentication data in response to receiving the warning signal; during a boot process of the electronic device, receiving, by a controller of the electronic device (e.g., the controller 50 mentioned above), the authentication data from the security chip and verifying, by the controller, whether the authentication data is consistent with the first code; allowing, by the controller, the boot process to continue when the authentication data is consistent with the first code, and otherwise causing, by the controller, the boot process to pause or terminate. In some embodiments, the method for protecting the electronic device can include the various operations performed by various components, such as the processor 70, the communication device 71, the security chip 30, the controller 50 and the chassis open detector 60A, 60B, 60C, 60D or 60E, as described hereinbefore.

In sum, the electronic device of the present disclosure includes a chassis open detector and a security chip. The security chip is configured to store authentication data and is configured to modify content of the authentication data in response to receiving a warning signal from the chassis opening detector, which indicates that the chassis of the electronic device has been opened. During the boot process of the electronic device, a controller of the electronic device receives the authentication data and checks if the authentication data has been modified. If the authentication data has not been modified, then the chassis has not been opened and the electronic device can boot normally. If the authentication data has been modified, then the controller causes the boot process to pause or terminate. The electronic device therefore does not load the operating system, and the data stored in the electronic device by the user is prevented from being stolen.

## Claims

1. An electronic device (12A-12E), **characterized by** comprising:
a chassis (20) having an internal space (29);
a chassis open detector (60A-60E) disposed in the internal space of the chassis and configured to generate a warning signal in response to the chassis being opened;
a security chip (30) configured to store authentication data, wherein in an initial state, the authentication data comprises a first code, and the security chip is communicably coupled to the chassis open detector and is configured to modify content of the authentication data in response to receiving the warning signal; and
a controller (50) communicably coupled to the security chip, wherein during a boot process of the electronic device, the controller is configured to receive the authentication data from the security chip and verify whether the authentication data is consistent with the first code, and when the authentication data is consistent with the first code, the controller allows the boot process to continue, otherwise the controller causes the boot process to pause or terminate.

2. The electronic device of claim 1, wherein the security chip (30) comprises a microprocessor (31) and a data storage device (35) sharing a secure communication channel with the microprocessor, the data storage device is configured to store the authentication data, the microprocessor is configured to instruct the data storage device to replace the first code with a second code in response to receiving the warning signal, and the second code is computed from the first code or randomly generated by the microprocessor or the data storage device.

3. The electronic device of any preceding claim, wherein the chassis (20) comprises a first housing component (21) and a second housing component (22), the first housing component and the second housing component are combined to form the chassis, and the chassis open detector (60A-60E) comprises at least one of:
a push button (61) disposed on the first housing component and being pressed by the second housing component;
a pressure sensor (69) disposed on the first housing component and being pressed by the second housing component;
a Hall sensor (63) and a magnet (65), provided at corresponding locations on the first housing component and the second housing component, respectively; or
a light sensor (67) configured to measure light intensity inside the chassis.

4. The electronic device of any preceding claim, wherein the controller (50) is further configured to receive disassembly authorization information and, based on the disassembly authorization information, determine whether to skip verifying whether the authentication data is consistent with the first code.

5. The electronic device of any preceding claim, wherein the controller (50) is an embedded controller, the embedded controller comprises a memory device (53) configured to store the first code, and the embedded controller is configured to verify whether the authentication data received from the security chip (30) is consistent with the first code stored in the memory device.

6. The electronic device of any preceding claim, wherein the controller (50) is configured to terminate or pause the boot process by prohibiting the electronic device (12A-12E) from loading an operating system.

7. The electronic device of any preceding claim, further comprising:
a communication device (71); and
a processor (70) coupled to the communication device and configured to:
determine whether there exists an authorized hardware security token (96) coupled to the electronic device (12A-12E) during the boot process;
when there exists the authorized hardware security token coupled to the electronic device, connect to a server (90) via the communication device and verify device identification information of the electronic device via the server; and
allow the boot process to continue when verification of the device identification information is successful.

8. The electronic device of claim 7, wherein the controller (50) comprises a memory device (53), the memory device is configured to store boot authorization information after successful verification of the device identification information, the controller is configured to determine whether the boot authorization information is stored in the memory device during the boot process, and the controller is configured to allow the boot process to continue when the boot authorization information is stored in the memory device.

9. A method for protecting an electronic device (12A-12E), **characterized by** comprising:
storing authentication data by a security chip (30) of the electronic device, wherein in an initial state, the authentication data comprises a first code;
detecting, by a chassis open detector (60A-60E) of the electronic device, an event of a chassis (20) of the electronic device being opened, and generating, by the chassis open detector, a warning signal in response to detection of the event;
modifying, by the security chip, content of the authentication data in response to receiving the warning signal;
during a boot process of the electronic device, receiving, by a controller (50) of the electronic device, the authentication data from the security chip and verifying, by the controller, whether the authentication data is consistent with the first code; and
allowing, by the controller, the boot process to continue when the authentication data is consistent with the first code, and otherwise causing, by the controller, the boot process to pause or terminate.

10. The method of claim 9, wherein the modifying the content of the authentication data comprises: replacing the first code with a second code, the second code being computed from the first code or randomly generated by the security chip (30).

11. The method of claim 9 or 10, wherein the detecting the event of the chassis being opened comprises:
using a push button (61), a pressure sensor (69), or a pair of Hall sensor (63) and magnet (65) to detect partial or complete separation of two housing components (21, 22) of the chassis (20); or
using a light sensor (67) disposed inside the chassis to detect light from surrounding environment entering the chassis.

12. The method of any of claims 9-11, wherein the controller (50) is an embedded controller, the embedded controller comprises a memory device (53) configured to store the first code, and the embedded controller is configured to verify whether the authentication data received from the security chip (30) is consistent with the first code stored in the memory device.

13. The method of any of claims 9-12, further comprising:
determining whether there exists an authorized hardware security token (96) coupled to the electronic device (12A-12E) during the boot process;
when there exists the authorized hardware security token coupled to the electronic device, connecting to a server (90) by the electronic device and verifying device identification information of the electronic device via the server; and
allowing the boot process to continue when verification of the device identification information is successful.

14. The method of claim 13, wherein the device identification information comprises at least one of: a serial number of the electronic device, an identifier of a hardware component of the electronic device, or a unique identifier of the electronic device, and wherein the unique identifier is a combination of identifiers of a number of hardware components of the electronic device.

15. A non-transitory computer readable storage medium, configured to store one or more executable instructions, **characterized in that**, the one or more executable instructions, when executed by a controller, causes the controller to:
receive authentication data from a security chip (30) of an electronic device (12A-12E) in response to a power button of the electronic device being pressed, wherein in an initial state, the authentication data comprises a first code, and wherein the security chip (30) is configured to modify content of the authentication data in response to a chassis (20) of the electronic device being opened;
verify whether the authentication data is consistent with the first code; and
allow the electronic device to boot up when the authentication data is consistent with the first code, and terminate or pause a boot process of the electronic device when the authentication data is not consistent with the first code.
